# FASCICULE DE BREVET EUROPEEN

(11) **EP 0 770 363 B1**
(45) Date de publication et mention de la délivrance du brevet: **02.01.2003**
(21) Numéro de dépôt: 96402241.2
(22) Date de dépôt: 21.10.1996
(51) Int. Cl.: A61C 8/00

(54) **Système implantable de support pour prothèse dentaire**
Implantierbares Unterstützungssystem für zahnärtzliche Prothese
Implantable supporting system for dental prosthesis

(30) Priorité: 27.10.1995 FR 9512705
(43) Date de publication de la demande: 02.05.1997
(73) Titulaire: POULMAIRE, Francis, F-84000 Avignon (FR)
(72) Inventeur: POULMAIRE, Francis, F-84000 Avignon (FR)
(74) Mandataire: Bugnon-Hays, Claudine

(56) Documents cités:
- EP-A- 0 641 549
- WO-A-93/08762
- FR-A- 2 646 079

## Description

La présente invention concerne un système implantable de support pour prothèse dentaire dont la vocation est de remplacer un organe dentaire.

On connaît déjà par le document FR-A-2.646.079 de la demanderesse un système du type comportant d'une part un corps d'implant de forme tubulaire destiné à être fixé dans une loge implantaire associée, et une tête d'implant destinée à être fixée sur le corps d'implant, ledit corps d'implant étant constitué par un tube cylindrique plein dans lequel est ménagé un évidement central débouchant en partie supérieure dudit tube, ledit évidement présentant un filetage interne au moins en partie combiné à un mécanisme six pans femelle.

Un tel système convient parfaitement pour les liaisons prothétiques utilisant une tête d'implant présentant une tige filetée qui vient simplement se visser dans le filetage interne de l'évidement central pour solidariser ladite tête d'implant au corps d'implant. Le mécanisme six pans femelle intégré à ce filetage interne permet d'utiliser un dispositif de positionnement à six pans mâle pour la mise en place du corps d'implant dans l'os maxillaire à l'aide d'une clé à cliquet appropriée, lequel dispositif est ensuite enlevé par un simple geste vers le haut, dans la direction de l'axe du filetage.

Cependant, la tendance actuelle est plutôt favorable à une nouvelle génération de liaisons prothétiques, pour laquelle la tête d'implant doit, une fois qu'elle est mise en place sur le corps d'implant, être bloquée en rotation par rapport audit corps.

Il devient par suite intéressant de chercher à utiliser le système implantable précité pour cette nouvelle génération de liaisons prothétiques.

On pourrait être tenté de prévoir un collage entre la face inférieure de la tête d'implant et la face supérieure du corps d'implant, ce collage assurant l'antirotation recherchée. Toutefois, cette technique présente un inconvénient important qui est le caractère indémontable de la liaison collée, ce qui empêche de remplacer la tête d'implant une fois celle-ci collée. De plus, aucun réglage angulaire n'est possible lorsque la tête d'implant est collée.

L'état de la technique peut être complété en mentionnant les documents WO-A-93 08762 et EP-A-0 641 549, brièvement résumés ci-après.

Le document WO-A-93 08762 décrit un implant fileté intérieurement, dont la tête présente un logement débouchant ayant en section la forme d'un carré à angles arrondis. La dent prothétique associée présente alors inférieurement une saillie de forme complémentaire, et elle est fixée sur l'implant par une vis dont la tige s'engage dans le filetage. Contrairement au document FR-A-2.646.079 précité, aucun mécanisme à six pans femelle n'est associé à ce filetage.

Le document EP-A-0 641 549 illustre quant à lui un implant vissé présentant intérieurement un filetage huit pans femelle, le huit pans servant à la mise en place d'un outil approprié, selon une approche analogue à celle du document FR-A-2.646.079.

L'invention a précisément pour but de résoudre le problème ci-dessus, en concevant un perfectionnement du système implantable précité qui permette de monter des têtes d'implants avec un blocage en rotation de la tête montée sur le corps d'implant, la liaison entre tête et corps étant en outre démontable pour pouvoir changer la tête d'implant, ou éventuellement modifier la position angulaire de celle-ci.

Ce problème est résolu selon l'invention, en prévoyant un système implantable de support pour prothèse dentaire, du type comportant d'une part un corps d'implant de forme tubulaire destiné à être fixé dans une loge implantaire associée, et une tête d'implant destinée à être fixée sur le corps d'implant, ledit corps d'implant étant constitué par un tube cylindrique plein dans lequel est ménagé un évidement central débouchant en partie supérieure dudit tube, ledit évidement présentant un premier filetage interne au moins en partie combiné à un mécanisme six pans femelle, caractérisé en ce que l'évidement central du tube cylindrique présente en outre un second filetage interne de diamètre plus faible que le premier filetage interne et s'étendant coaxialement dans le prolongement direct de l'extrémité inférieure de celui-ci, et, entre l'extrémité supérieure dudit premier filetage interne et la face supérieure dudit tube cylindrique, un logement axial polygonal dont le diamètre intérieur est supérieur à celui du premier filetage interne, et en ce que la tête d'implant présente soit une tige filetée venant se visser de façon connue en soi dans le premier filetage interne, soit un alésage central étagé et une face inférieure à protubérance polygonale de forme complémentaire au logement polygonal précité, ladite tête d'implant étant alors solidarisée audit tube cylindrique par un tirant fileté venant se visser dans le second filetage interne et dont la tête est reçue dans l'alésage central étagé, avec un blocage en rotation assuré par l'emboîtement de la protubérance polygonale dans le logement polygonal associé.

On obtient ainsi un système implantable polyvalent, permettant d'utiliser de nombreux types de têtes d'implants, avec ou sans blocage en rotation, la liaison par vissage entre tête et corps d'implant étant, en outre, dans tous les cas démontable.

De préférence, le logement polygonal s'étend axialement jusqu'au premier filet du premier filetage interne.

Avantageusement encore, la hauteur de la protubérance polygonale est inférieure à la profondeur du logement polygonal associé.

Conformément à un mode d'exécution particulier, la forme polygonale choisie pour la protubérance et le logement associé est celle d'un octogone régulier. De préférence alors, le cercle inscrit du logement octogonal a un diamètre très légèrement supérieur au diamètre de fond de filet du premier filetage interne.

Enfin lorsqu'il s'agit d'un système implantable dans lequel le tube cylindrique présente à sa portion inférieure un évidement transversal débouchant de chaque côté par un méplat au niveau de la surface latérale dudit tube, il est avantageux que le second filetage interne se termine par un fond qui constitue le fond de l'évidement central et il a une longueur axiale optimisée pour assurer un ancrage fiable du tirant fileté tout en permettant une hauteur maximale de l'évidement transversal entre ce fond de filetage et la partie apicale dudit tube cylindrique.

D'autres caractéristiques et avantages de l'invention apparaîtront plus clairement à la lumière de la description qui va suivre et des dessins annexés, concernant un mode de réalisation particulier, en référence aux figures, où :
- les figures 1 et 2 illustrent en élévation deux systèmes implantables conformes à l'invention, avec leur tête d'implant montée sur le corps d'implant, le premier système ayant un corps d'implant agencé pour être mis en place par vissage et le second par impactage ;
- la figure 3 est un vue de dessus du corps d'implant de l'un ou l'autre des deux systèmes implantables précités,
- la figure 4 est une coupe selon IV-IV de la figure 1, permettant de distinguer l'agencement particulier de l'évidement central du corps d'implant, avec en vue éclatée trois ensembles fonctionnels associés pour mieux illustrer la polyvalence du système implantable selon l'invention.

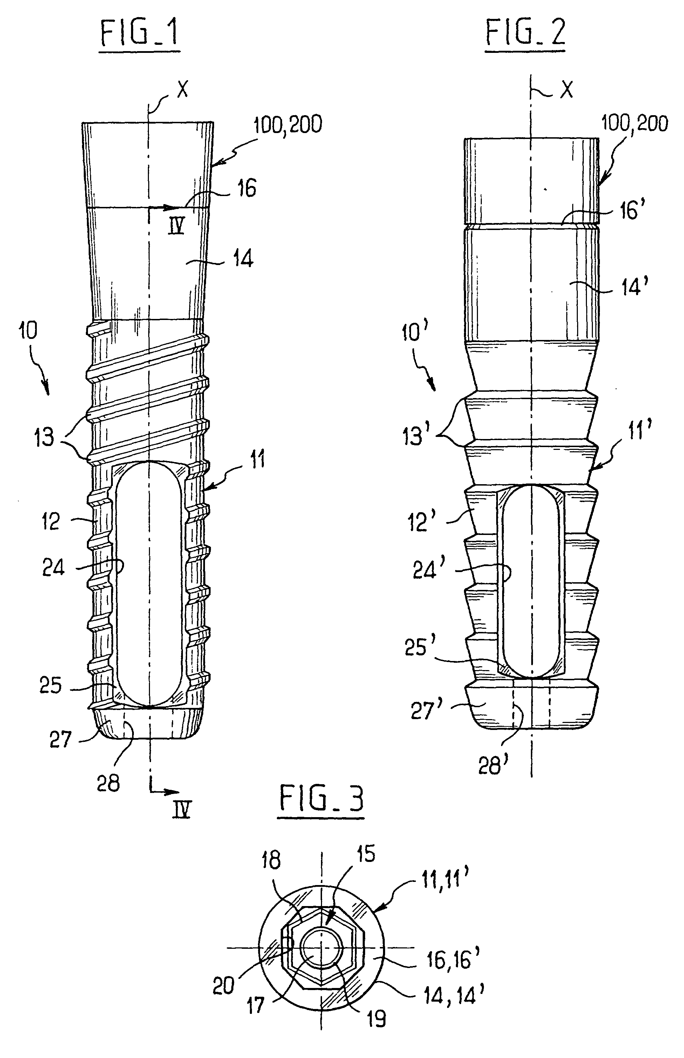

La figure 1 illustre un système implantable 10 conforme à l'invention, dont la géométrie extérieure s'apparente tout à fait à celle du système décrit dans le document FR-A-2.646.079 de la demanderesse. On distingue ainsi un corps d'implant 11 de forme tubulaire, qui est destiné à être fixé dans une loge implantaire associée (non représentée ici), et une tête d'implant notée 100, 200 (deux types de têtes sont en effet envisageables, ainsi que cela sera expliqué plus loin) destinée à être fixée sur ce corps d'implant. Le corps d'implant est constitué par un tube cylindrique plein 11 d'axe X, dont la portion inférieure 12 présente extérieurement des filets 13 (dont le pas est, de préférence, au moins égal à 1,25 mm) pour une mise en place par vissage du corps d'implant dans la loge implantaire associée. La portion inférieure 12 du tube cylindrique 11 présente en outre un évidement transversal 24 servant à favoriser l'ancrage du corps d'implant une fois celui-ci mis en place, par coopération avec la formation osseuse environnante. Cet évidement transversal 24 débouche de chaque côté par un méplat 25 au niveau de la surface latérale du tube cylindrique 11, afin d'éviter la présence d'une arête vive le long des bords dudit évidement transversal. La partie apicale 27 du tube cylindrique 11 présente ici, en outre, un orifice central de décompression 28. Le corps d'implant 11 présente par ailleurs une partie supérieure 14, se présentant ici sous la forme d'une portion légèrement tronconique, à surface extérieure lisse. La tête d'implant 100, 200, une fois montée sur le corps d'implant, vient en appui sur la face supérieure 16 de cette partie 14.

La figure 2 illustre un système implantable analogue 10', qui se différencie du précédent par son mode de mise en place dans la loge implantaire associée, laquelle mise en place ne se fait pas par vissage mais par impactage. Dans ce cas, la portion inférieure 12' du corps d'implant 11' présente, à la place des filets, des épaulements successifs 13' en saillie, qui constituent des arêtes d'accrochage lorsque le corps d'implant est rentré à force dans la loge implantaire associée. Comme précédemment, le corps d'implant 11' présente un évidement transversal 24' débouchant de chaque côté par un méplat 25' au niveau de la surface latérale du tube cylindrique 11', et la partie apicale 27' présente un orifice central de décompression 28'. La partie supérieure 14' du corps d'implant 11' est ici de forme cylindrique, et la tête d'implant 100,200, par exemple également de forme cylindrique, est en appui sur la face supérieure 16' de cette partie 14'.

La vue en bout de la figure 3 permet de distinguer la présence d'un évidement central 15 qui débouche en partie supérieure du tube cylindrique 11 ou 11', au niveau de la face supérieure 16 ou 16' dudit tube. Conformément à la technique antérieure précitée, l'évidement central 15 présente un filetage interne 18 qui est au moins en partie combiné à un mécanisme six pans femelle (asymétrique de préférence). Un tel mécanisme six pans femelle (asymétrique de préférence) est décrit en détail dans le document FR-A-2.646.079 de la demanderesse, et ne sera donc pas décrit en détail ici. Il suffit de rappeler que ce mécanisme permet d'utiliser un dispositif de positionnement à six pans mâle pour la mise en place d'un corps dans l'os maxillaire à l'aide d'une clé à cliquet appropriée, lequel dispositif est ensuite enlevé par un simple geste vers le haut, le corps d'implant restant alors en place dans sa loge.

Conformément à une caractéristique essentielle de l'invention, l'évidement central 15 du tube cylindrique 11 ou 11' présente en outre un second filetage interne 19 de diamètre plus faible que le filetage interne précité 18 et s'étendant coaxialement dans le prolongement direct de l'extrémité inférieure de celui-ci. En outre, l'évidement central 15 présente, entre l'extrémité supérieure du premier filetage interne 18 et la face supérieure 16 ou 16' du tube cylindrique 11 ou 11', un logement axial polygonal 20 dont le diamètre interne est supérieur à celui du premier filetage interne 18.

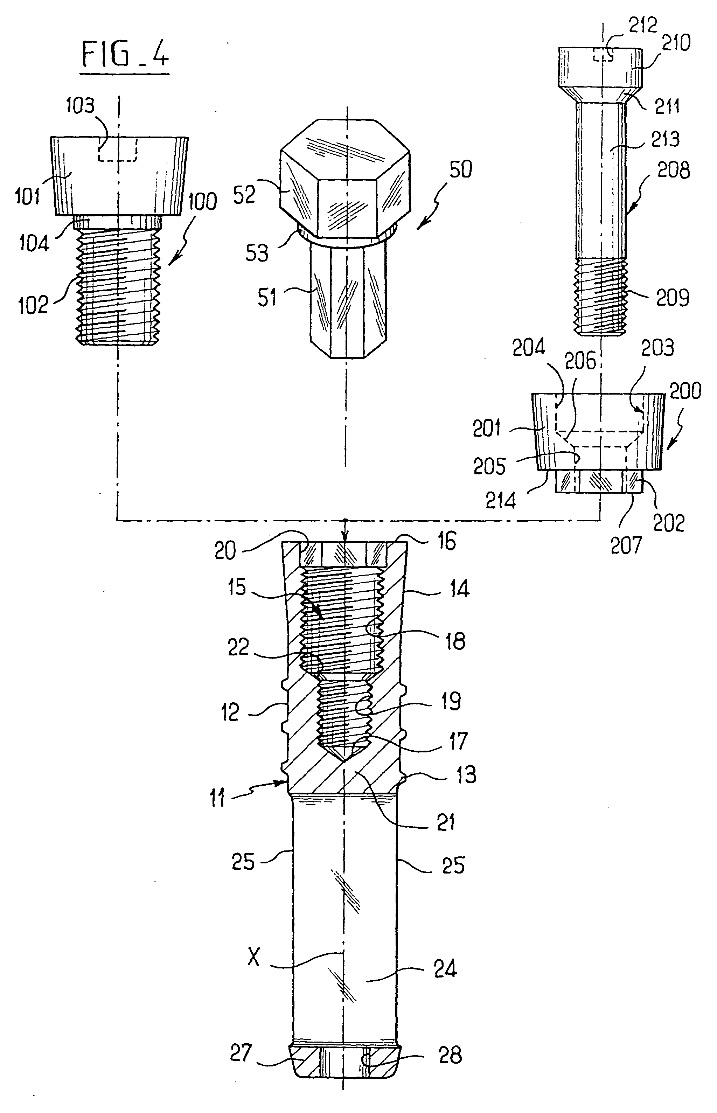

L'agencement particulier de l'évidement central 15 sera mieux compris en se référant à la coupe axiale de la figure 4.

On distingue ainsi successivement une partie de matière 21 (entre l'extrémité supérieure de l'évidement transversal 24 et l'extrémité inférieure notée 17 de l'évidement central) formant le fond de l'évidement central 15, puis le second filetage interne 19, qui est un filetage cylindrique de type traditionnel. Ce second filetage interne 19 se raccorde par une portion de transition 22, par exemple tronconique, au premier filetage interne 18, qui est quant à lui combiné à un mécanisme six pans femelle, en l'espèce prévu sur toute la longueur axiale de celui-ci. Enfin, on trouve le logement axial polygonal 20, qui ici s'étend axialement jusqu'au premier filet du filetage interne 18 et dont le diamètre est de préférence très légèrement supérieur au diamètre de fond de filet du premier filetage interne 18. Ce logement polygonal 20 débouche, par ses facettes parallèles à l'axe X, au niveau de la face supérieure 16 du corps d'implant 11. La forme polygonale choisie pour le logement 20 est ici celle d'un octogone régulier, et le cercle inscrit de ce logement octogonal a un diamètre très légèrement supérieur au diamètre de fond de filet du premier filetage interne 18.

La structure du corps d'implant qui vient d'être décrit permet une coopération avec trois types d'ensembles fonctionnels qui vont maintenant être décrits en référence à la figure 4.

On trouve tout d'abord un dispositif de positionnement 50 présentant une tige polygonale 51 et une tête polygonale 52. La tige 51 présente un contour hexagonal homologue de celui du logement six pans femelle associé au premier filet interne 18, de façon à pouvoir transmettre un couple de rotation lorsque cette tige 51 est enfichée dans l'évidement central 15, c'est-à-dire plus précisément dans la partie de cet évidement qui correspond au premier filetage 18 (en butant éventuellement contre l'épaulement conique 22). La tête 52, également hexagonale, permet la liaison à une clé à cliquet servant à entraîner en rotation le dispositif de positionnement à six pans mâle. Ce dispositif de positionnement 50 sert essentiellement dans le cas où le corps d'implant 11 présente extérieurement un filetage 13. Il peut cependant être aussi utilisé dans le cas d'un corps d'implant mis en place par impactage, afin d'éviter la frappe directe de l'outil sur la face supérieure du corps d'implant.

Le corps d'implant 11 peut ensuite recevoir une tête d'implant 100 de type classique, constituée par un corps de tête 101, une tige filetée 102 agencée pour pouvoir se visser dans le premier filetage interne 18. Le corps de tête 101 présente supérieurement un évidement débouchant 103, par exemple à quatre pans pour son entraînement en rotation par un outil approprié. La liaison de la tête d'implant 100 est alors assurée par un simple vissage direct de la tige filetée 102 dans le filetage interne 18 de l'évidement central 15, comme cela est décrit dans le document antérieur précité.

Le corps d'implant 11 peut enfin recevoir également une tête d'implant 200 qui est conforme à la nouvelle génération recherchée de têtes d'implant, c'est-à-dire qui inclut un moyen d'anti-rotation une fois ladite tête mise en place sur le corps d'implant.

A cet effet, la tête d'implant 200 présente un corps de tête 201 qui est muni d'un alésage central étagé 203, et, au niveau de sa face inférieure 213, d'une protubérance polygonale 202 de forme complémentaire au logement polygonal 20 du corps d'implant 11. La hauteur de cette protubérance polygonale 202, par exemple de l'ordre du millimètre, sera inférieure à la profondeur du logement polygonal associé 20, de façon à permettre un bon contact d'appui entre la face inférieure 213 du corps de tête 201 et la face supérieure 16 du corps d'implant 11.

Compte tenu de la forme octogonale choisie en l'espèce, la protubérance 202 présente également cette forme octogonale, de façon à pouvoir être directement reçue dans le logement octogonal associé 20 lorsqu'elle est en appui sur la face supérieure 16 du corps d'implant 11. Dans cette position, le corps de tête 201 est bloqué en rotation par rapport au corps d'implant 11, grâce au mécanisme antirotation huit pans, par emboîtement des formes complémentaires mâle 202 et femelle 201. La tête d'implant 200 est en outre solidarisée au tube cylindrique 11 par un tirant fileté 208 dont la tige 213 passe par l'alésage central 203 du corps de tête 201. La tige 213 du tirant 208 présente une extrémité filetée 209, dont le filetage correspond au deuxième filetage interne 19, et cette tige est surmontée par une tête élargie 210, qui se raccorde par un épaulement conique 211 à ladite tige filetée. La tête de tirant 210 présente également un évidement 212, par exemple à quatre pans creux, servant à entraîner ledit tirant en rotation par un outil approprié. Lorsque le tirant 208 est enfilé dans le corps de tête 201, sa tête 210 est reçue dans l'alésage central étagé 203, avec l'épaulement conique 211 venant en appui contre la portion conique 206 de l'alésage étagé 203, qui sépare les alésages cylindriques 204 et 205 de diamètres différents.

Dans la pratique, la longueur axiale du second filetage interne 19 sera optimisée pour assurer un ancrage fiable du tirant fileté 208 tout en permettant une hauteur maximale de l'évidement transversal 24 entre le fond de filetage et la partie apicale du corps d'implant. Ainsi, il suffit de mettre en place la tête d'implant 201 sur la portion supérieure 14 du corps d'implant 11, dans la position angulaire adéquate, après quoi, on enfile simplement le tirant 208, et on procède au vissage de celui-ci jusqu'au blocage de la tête d'implant 201. Là encore, la liaison vissée est démontable, et on peut ainsi aisément remplacer la tête d'implant par une autre tête. On peut aussi relever légèrement le corps de tête 201 en dévissant le tirant 208, suffisamment pour dégager la protubérance octogonale 202 de son logement 20, afin de faire tourner ce corps de tête d'un ou plusieurs huitièmes de tour.

On est ainsi parvenu à concevoir un système implantable polyvalent perfectionnant le système implantable connu, qui permet de monter des têtes d'implant avec un blocage en rotation de la tête montée sur le corps d'implant, la liaison étant démontable pour pouvoir changer la tête d'implant.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Système implantable de support pour prothèse dentaire, comportant d'une part un corps d'implant (11) de forme tubulaire destiné à être fixé dans une loge implantaire associée, et une tête d'implant (100 ; 200) destinée à être fixée sur le corps d'implant, ledit corps d'implant étant constitué par un tube cylindrique plein (11) dans lequel est ménagé un évidement central (15) débouchant en partie supérieure dudit tube, ledit évidement présentant un premier filetage interne (18) au moins en partie combiné à un mécanisme six pans femelle, **caractérisé en ce que** l'évidement central (15) du tube cylindrique (11) présente en outre un second filetage interne (19) de diamètre plus faible que le premier filetage interne (18) et s'étendant coaxialement dans le prolongement direct de l'extrémité inférieure de celui-ci, et, entre l'extrémité supérieure dudit premier filetage interne et la face supérieure (16) dudit tube cylindrique, un logement axial polygonal (20) dont le diamètre intérieur est supérieur à celui du premier filetage interne (18), et **en ce que** la tête d'implant (100 ; 200) présente soit une tige filetée (102) venant se visser de façon connue en soi dans le premier filetage interne (18), soit un alésage central étagé (203) et une face inférieure à protubérance polygonale (202) de forme complémentaire au logement polygonal précité (20), ladite tête d'implant étant alors solidarisée audit tube cylindrique par un tirant fileté (208) venant se visser dans le second filetage interne (19) et dont la tête (210) est reçue dans l'alésage central étagé (203), avec un blocage en rotation assuré par l'emboîtement de la protubérance polygonale (202) dans le logement polygonal associé (20).

2. Système implantable selon la revendication 1, **caractérisé en ce que** le logement polygonal (20) s'étend axialement jusqu'au premier filet du premier filetage interne (18).

3. Système implantable selon la revendication 1 ou la revendication 2, **caractérisé en ce que** la hauteur de la protubérance polygonale (202) est inférieure à la profondeur du logement polygonal associé (20).

4. Système implantable selon l'une des revendications 1 à 3, **caractérisé en ce que** la forme polygonale choisie pour la protubérance (202) et le logement associé (20) est celle d'un octogone régulier.

5. Système implantable selon la revendication 4, **caractérisé en ce que** le cercle inscrit du logement octogonal (20) a un diamètre très légèrement supérieur au diamètre de fond de filet du premier filetage interne (18).

6. Système implantable selon l'une des revendications 1 à 5, dans lequel le tube cylindrique (11) présente à sa portion inférieure un évidement transversal (24) débouchant de chaque côté par un méplat (25) au niveau de la surface latérale dudit tube, **caractérisé en ce que** le second filetage interne (19) se termine par un fond (21) qui constitue le fond de l'évidement central (15) et il a une longueur axiale optimisée pour assurer un ancrage fiable du tirant fileté (208) tout en permettant une hauteur maximale de l'évidement transversal (15) entre ce fond de filetage et la partie apicale (27) dudit tube cylindrique.

## Patentansprüche

1. Implantierbares Trägersystem für eine Zahnprothese, umfassend einerseits einen rohrförmigen Implantatkörper (10), der dazu bestimmt ist, in einer dazugehörigen Implantataufnahme befestigt zu werden, und andererseits einen Implantatkopf (100; 200), der dazu bestimmt ist, an dem Implantatkörper befestigt zu werden, wobei der genannte Implantatkörper aus einem massiven zylindrischen Rohr (11) besteht, in dem eine zentrale Aussparung (15) ausgebildet ist, die im oberen Teil des genannten Rohres mündet, wobei die genannte Aussparung ein erstes Innengewinde (18) aufweist, das zumindest teilweise mit einem Innensechskantmechanismus kombiniert ist, **dadurch gekennzeichnet, daß** die zentrale Aussparung (15) des zylindrischen Rohres (11) ferner ein zweites Innengewinde (19) aufweist, dessen Durchmesser kleiner als der Durchmesser des ersten Innengewindes (18) ist und das sich koaxial in der direkten Verlängerung des unteren Endes des ersten Innengewindes erstreckt, sowie zwischen dem oberen Ende des genannten ersten Innengewindes und der oberen Fläche (16) des genannten zylindrischen Rohres eine polygonale axiale Aufnahme (20) hat, deren Innendurchmesser größer als der des ersten Innengewindes (18) ist, und daß der Implantatkopf (100; 200) entweder einen mit einem Gewinde versehenen Bolzen (102) aufweist, der sich auf an sich bekannte Weise in das erste Innengewinde (18) schrauben wird, oder eine zentrale, abgestufte Bohrung (203) und eine untere Fläche mit polygonalem Vorsprung (202) hat, der eine Form hat, die komplementär zur vorgenannten polygonalen Aufnahme (20) ist, wobei der genannte Implantatkopf dann mit dem genannten zylindrischen Rohr durch einen mit einem Gewinde versehenen Bolzen (208) fest verbunden wird, der sich in das zweite Innengewinde (19) schrauben wird und dessen Kopf (210) in der zentralen, abgestuften Bohrung (203) aufgenommen ist, mit einer Rotationssperre, die durch Einfügen des polygonalen Vorsprungs (202) in die dazugehörige polygonale Aufnahme (20) sichergestellt wird.

2. Implantierbares System nach Anspruch 1, **dadurch gekennzeichnet, daß** sich die polygonale Aufnahme (20) axial bis zum ersten Gewindegang des ersten Innengewindes (18) erstreckt.

3. Implantierbares System nach Anspruch 1 oder Anspruch 2, **dadurch gekennzeichnet, daß** die Höhe des polygonalen Vorsprungs (202) niedriger als die Tiefe der dazugehörigen polygonalen Aufnahme (20) ist.

4. Implantierbares System nach einem der Ansprüche 1 bis 3, **dadurch gekennzeichnet, daß** die für den Vorsprung (202) und die dazugehörige Aufnahme (20) gewählte polygonale Form die eines regelmäßigen Achtecks ist.

5. Implantierbares System nach Anspruch 4, **dadurch gekennzeichnet, daß** der Inkreis der achteckigen Aufnahme (20) einen Durchmesser hat, der äußerst geringfügig größer als der Durchmesser des Gewindegrundes des ersten Innengewindes (18) ist.

6. Implantierbares System nach einem der Ansprüche 1 bis 5, bei dem das zylindrische Rohr (11) an seinem unteren Abschnitt eine transversale Aussparung (24) hat, die auf jeder Seite in eine Abflachung (25) im Bereich der Mantelfläche des genannten Rohres mündet, **dadurch gekennzeichnet, daß** das zweite Innengewinde (19) mit einem Boden (21) abschließt, der den Boden der zentralen Aussparung (15) bildet, und eine axiale Länge hat, die optimiert ist, um eine zuverlässige Verankerung des mit einem Gewinde versehenen Bolzens (208) sicherzustellen, während gleichzeitig eine maximale Höhe für die transversale Aussparung (24) zwischen diesem Boden des Gewindes und dem apikalen Teil (27) des genannten zylindrischen Rohres ermöglicht wird.

## Claims

1. An implantable support system for a dental prosthesis, the system comprising firstly an implant body (??) of tubular shape for fixing in an associated implant housing, and an implant head (100; 200) for fixing on the implant body, said implant body being constituted by a solid cylindrical tube (11) having a central recess (15) formed therein opening out at the top portion of said tube, said recess presenting a first inside thread (18) combined at least in part with a screw-driving socket mechanism, the system being **characterized in that**: the central recess (15) of the cylindrical tube (11) further presents both a second inside thread (19) of smaller diameter than the first inside thread (18) and extending axially in line directly from the bottom end thereof, and a polygonal axial socket (20) between the top end of said first inside thread and the top face (16) of said cylindrical tube, the inside diameter of the polygonal socket being greater than the inside diameter of the first inside thread (18); and **in that** the implant head (100; 200) presents either a threaded rod (102) for screwing in conventional manner in the first inside thread (18), or a stepped central bore (203) and a bottom face having a polygonal projection (202) of shape complementary to the above-specified polygonal socket (20), said implant head then being secured to said cylindrical tube by a threaded tension rod (208) that screws into the second inside thread (19) and whose head (210) is received in the stepped central bore (203), with rotation being prevented by the polygonal projection (202) engaging in the associated polygonal socket (20).

2. An implantable system according to claim 1, **characterized in that** the polygonal socket (20) extends axially to the first thread of the first inside thread (18).

3. An implantable system according to claim 1 or claim 2, **characterized in that** the height of the polygonal projection (202) is smaller than the depth of the associated polygonal socket (20).

4. An implantable system according to any one of claims 1 to 3, **characterized in that** the polygonal shape selected for the projection (202) and the associated socket (20) is that of a regular octagon.

5. An implantable system according to claim 4, **characterized in that** the inscribed circle of the octagonal socket (20) is of a diameter that is slightly greater than the diameter at the roots of the first inside thread (18).

6. An implantable system according to any one of claims 1 to 5, in which the cylindrical tube (11) presents a transverse recess (24) in its bottom portion opening out on either side via a flat (25) in the side surface of said tube, the system being **characterized in that** the second inside thread (19) terminates in an end wall (21) constituting the end wall of the central recess (15) and of axial length that is optimized to ensure reliable anchoring of the threaded tension rod (208) while nevertheless allowing maximum height for the transverse recess (24) between said end wall of the thread and the tip portion (27) of said cylindrical tube.
